# EUROPEAN PATENT APPLICATION

(11) **EP 4 557 190 A1**
(43) Date of publication of application: **21.05.2025**
(21) Application number: 22951087.0
(22) Date of filing: 13.07.2022
(51) Int. Cl.: G06Q 10/06

(54) **PLANNING PROGRAM, PLANNING METHOD, AND INFORMATION PROCESSING DEVICE**

(71) Applicant: Fujitsu Limited, Kawasaki-shi, Kanagawa 211-8588 (JP)
(72) Inventor: ITANI, Norihiko, Kawasaki-shi, Kanagawa 211-8588 (JP); YAMAZAKI, Takashi, Kawasaki-shi, Kanagawa 211-8588 (JP)
(74) Representative: Haseltine Lake Kempner LLP
(86) International application number: PCT/JP2022/027535
(87) International publication number: WO 2024/013873

(57) **Abstract**

A planning program causes a computer to execute: a first stage of arranging a plurality of objects in processing entities of a plurality of types of processing by forward arrangement in which arrangement is planned with a predetermined time point as a starting point according to a predetermined order for the plurality of objects; a second stage of arranging the plurality of objects in the processing entities of the plurality of types of processing by backward arrangement in which arrangement is planned in a direction opposite to a time axis with a predetermined time point as a starting point according to a processing completion order of each object of final processing in the arrangement obtained in the first stage; a third stage of aligning processing start times of each object from a front in each processing in the arrangement obtained in the second stage; and a fourth stage of moving forward the arrangement obtained in the third stage to a predetermined time point.

## Description

### TECHNICAL FIELD

The present case relates to a planning program, a planning method, and an information processing device.

### BACKGROUND ART

A technology for optimizing scheduling in a plan of performing processing on a plurality of objects in each stage is disclosed (see, for example, Patent Documents 1 to 4).

### CITATION LIST

### PATENT DOCUMENT

Patent Document 1: Japanese Laid-open Patent Publication No. 07-021264
Patent Document 2: US Patent Publication No. 2005/0149219
Patent Document 3: US Patent Publication No. 2006/0026052
Patent Document 4: Japanese Laid-open Patent Publication No. 2013-152648

### SUMMARY OF INVENTION

### TECHNICAL PROBLEM

However, it is difficult to satisfy predetermined conditions for both a processing completion time and an operation rate.

In one aspect, an object of the present invention is to provide a planning program, a planning method, and an information processing device capable of satisfying predetermined conditions for both a processing completion time and an operation rate.

### SOLUTION TO PROBLEM

In one aspect, a planning program is a planning program that sequentially performs a plurality types of processing on a plurality of objects, in which a processing time is set for each of the plurality of types of processing for each of the plurality of objects and the number of processing entities for any one of the plurality of objects is set for each of the plurality of types of processing, and performs a plan of arranging the plurality of objects in the processing entities of the plurality of types of processing under a condition that, during a period in which the processing entity is performing processing on any one of the objects, the processing entity do not perform processing on another object, and the planning program causes a computer to execute processing including: a first stage of arranging the plurality of objects in the processing entities of the plurality of types of processing by forward arrangement in which arrangement is planned with a predetermined time point as a starting point according to a predetermined order for the plurality of objects; a second stage of arranging the plurality of objects in the processing entities of the plurality of types of processing by backward arrangement in which arrangement is planned in a direction opposite to a time axis with a predetermined time point as a starting point according to a processing completion order of each object of final processing in the arrangement obtained in the first stage; a third stage of aligning processing start times of each object from a front in each processing in the arrangement obtained in the second stage; and a fourth stage of moving forward the arrangement obtained in the third stage to a predetermined time point.

### ADVANTAGEOUS EFFECTS OF INVENTION

Predetermined conditions may be satisfied for both a processing completion time and an operation rate.

### BRIEF DESCRIPTION OF DRAWINGS

FIG. 1A is a diagram exemplifying a work line, and FIG. 1B is a diagram exemplifying master data.
FIG. 2 is a diagram exemplifying a flow in a case where forward arrangement is applied to a priority method.
FIGs. 3A and 3B are diagrams for describing an arrangement example in a case where the forward arrangement is applied to the priority method.
FIG. 4 is a diagram exemplifying a flow in a case where the forward arrangement is applied to a FIFO method.
FIGs. 5A and 5B are diagrams exemplifying the forward arrangement of the FIFO method.
FIG. 6A is a diagram exemplifying backward arrangement of the priority method, and FIG. 6B is a diagram exemplifying the backward arrangement of the FIFO method.
FIG. 7A is a diagram exemplifying a case where priority of each product type is optimized under a constraint of strictly adhering to a deadline in a case where the forward arrangement is applied to the priority method, and FIG. 7B is a diagram exemplifying a case where the priority of each product type is optimized under the constraint of strictly adhering to the deadline in a case where the backward arrangement is applied to the priority method.
FIG. 8A is a diagram exemplifying a case where an input order of each product type is optimized under the constraint of strictly adhering to the deadline in a case where the forward arrangement is applied to the FIFO method, and FIG. 8B is a diagram exemplifying a case where the input order of each product type is optimized under the constraint of strictly adhering to the deadline in a case where the backward arrangement is applied to the FIFO method.
FIG. 9A is a diagram exemplifying a device operation rate, and FIG. 9B is a diagram exemplifying the device operation rate in each method.
FIG. 10 is a diagram exemplifying a case where each product type is arranged in each stage so that the device operation rate is optimized.
FIG. 11A is a functional block diagram representing an overall configuration of an information processing device according to a first embodiment, and FIG. 11B is a block diagram exemplifying a hardware configuration of each unit of the information processing device.
FIG. 12A is a diagram exemplifying a procedure 01, and FIG. 12B is a diagram exemplifying a case where arrangement is performed according to a procedure 02.
FIGs. 13A and 13B are diagrams exemplifying a procedure 03.
FIG. 14A is a diagram exemplifying the procedure 03, and FIG. 14B is a diagram exemplifying a procedure 04.
FIG. 15 is a diagram exemplifying an optimization processing flow executed by the information processing device.
FIG. 16 is a flowchart exemplifying details of processing in step S3.
FIG. 17 is a flowchart exemplifying details of the procedure 01.
FIG. 18 is a flowchart exemplifying details of the procedure 02.
FIG. 19 is a flowchart exemplifying details of the procedure 03.
FIG. 20 is a flowchart exemplifying details of the procedure 04.
FIG. 21 is a diagram illustrating a simulation result.
FIG. 22A is a diagram illustrating a result of optimization processing in a case where the number of devices in a stage 1 is 2, the number of devices in a stage 2 is 2, and the number of devices in a stage 3 is 1, and FIG. 22B is a diagram illustrating a result of the optimization processing in a case where the number of devices in the stage 1 is 2, the number of devices in the stage 2 is 2, and the number of devices in the stage 3 is 2.
FIG. 23 is a block diagram exemplifying a case where a result of an output unit is output to an operation device.

### DESCRIPTION OF EMBODIMENTS

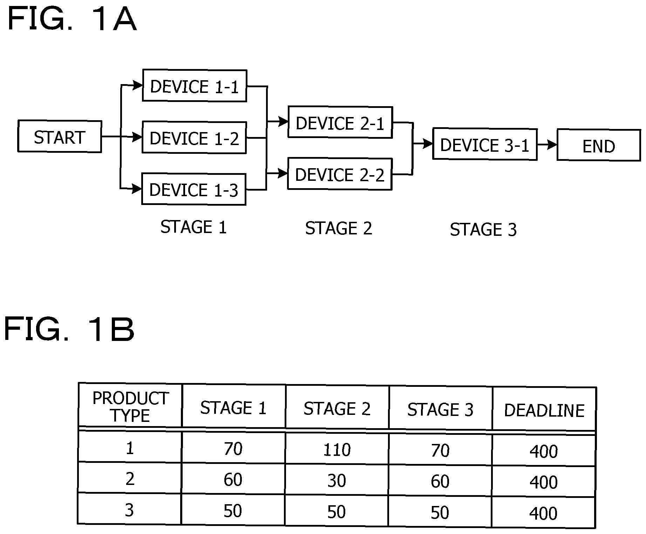

First, an outline of a processing line for sequentially performing a plurality of stages on a plurality of objects will be described. As an example, a work line in which work is performed in each stage for each product type will be described. In the work line, a plurality of stages is sequentially performed for each of a plurality of product types. FIG. 1A is a diagram exemplifying the work line. In the example of FIG. 1A, it is assumed that three stages of a stage **1,** a stage **2,** and a stage 3 are sequentially performed.

In each stage, the number of processing entities that perform work on each product type is set. Three devices of devices 1-1 to 1-3 are provided as the processing entities for performing the stage 1. Two devices of devices 2-1 and 2-2 are provided as the processing entities for performing the stage 2. One device of a device 3-1 is provided as the processing entity for performing the stage 3. In this manner, for each stage, the number of devices for performing the stage may be different. Furthermore, there is a stage in which the number of devices is smaller than the number of product types. During a period in which a device is performing work on a product type, the device does not perform work on another product type.

FIG. 1B is a diagram exemplifying master data. The master data includes all product types on which work is performed in the work line, and includes a work time (takt time) needed for work performed in each stage for each product type. In the example of FIG. 1B, the master data includes product types 1 to 3.

As exemplified in FIG. 1B, for the product type 1, the takt time in the stage 1 is set to 70 minutes, the takt time in the stage 2 is set to 110 minutes, and the takt time in the stage 3 is set to 70 minutes. For the product type 2, the takt time in the stage 1 is set to 60 minutes, the takt time in the stage 2 is set to 30 minutes, and the takt time in the stage 3 is set to 60 minutes. For the product type 3, the takt time in the stage 1 is set to 50 minutes, the takt time in the stage 2 is set to 50 minutes, and the takt time in the stage 3 is set to 50 minutes. In this manner, for each product type, the takt time in each stage may be different. Note that, it is assumed that the takt time does not change in each stage regardless of which device is used to perform the work. For example, for the product type 1, the takt time in the device 1-1 and the takt time in the device 1-2 are the same at 70 minutes.

Furthermore, as exemplified in FIG. 1B, a deadline is set for each product type. In the example of FIG. 1B, 400 minutes is set as the deadline for all of the product types 1 to 3. The deadline is a time that needs to be adhered so that a work completion time in a last stage is at or before that time.

When the sufficient number of devices are provided in each stage, a standby time in which the work is not performed for each product type does not occur. However, in an actual site, the sufficient number of devices are not necessarily provided. In the example of FIG. 1A, there is one device for performing the stage 3. Therefore, the standby time for the work is likely to occur. In this case, a method for optimizing a plan (scheduling) for arranging each product type in each device is desired.

Scheduling arrangement rules are roughly divided into two types. The first arrangement rule is a priority method, and the second arrangement rule is a First-in First-out method. The First-in First-out method may be referred to as a FIFO method. The priority method is a method of arranging each product type in each device of each stage according to a priority set to each product type. The First-in First-out method is a method of arranging each product type in a first stage according to a predetermined order, and thereafter arranging each product type in next stages in an order of completion of processing in each stage.

Next, as a starting point of the scheduling, two types of methods are exemplified. The first method is forward arrangement, and the second method is backward arrangement. The forward arrangement is a method of making the plan with an input to a manufacturing line as the starting point. The backward arrangement is a method of making the plan in a direction opposite to a time axis with the deadline as the starting point.

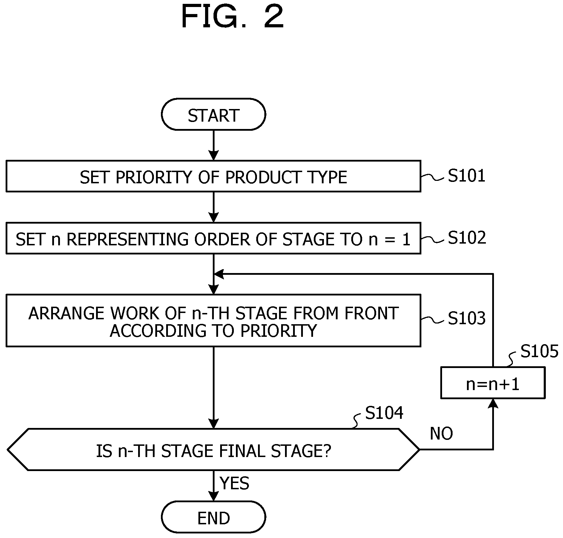

FIG. 2 is a diagram exemplifying a flow in a case where the forward arrangement is applied to the priority method. As exemplified in FIG. 2, first, a priority of a product type is set (step S101). Next, a variable n representing an order of a stage is set to n = 1 (step S102). Next, work of an n-th stage is arranged from the front according to the priority (step S103). Next, it is determined whether or not the n-th stage is the final stage (step S104). In a case where "No" is determined in step S104, 1 is added to the variable n (step S105). Thereafter, step S103 and the subsequent steps are executed again. In a case where "Yes" is determined in step S104, the flow is ended.

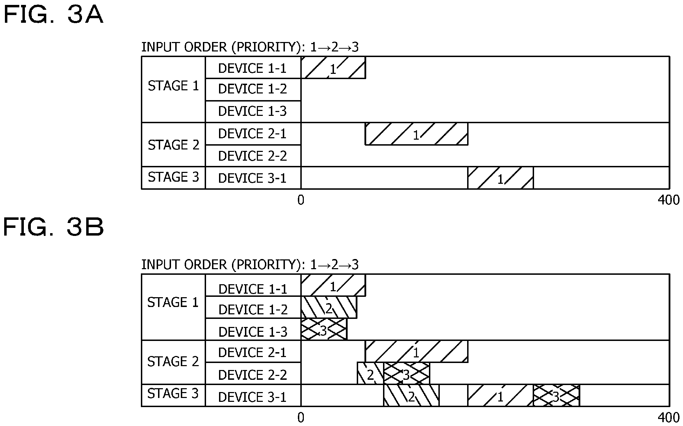

FIGs. 3A and 3B are diagrams for describing an arrangement example in a case where the forward arrangement is applied to the priority method. As exemplified in FIG. 3A, each product type is arranged according to the priority. For example, it is assumed that the priorities are set in an order of the product type 1, the product type 2, and the product type 3. In this case, the product type 1 is arranged in any one of the devices in the stage 1 (the device 1-1 in the example of FIG. 3A) at 0 minute which is the input starting point to the work line. Next, immediately after the takt time of the product type 1 in the stage 1, the product type 1 is arranged in any one of the devices in the stage 2 (the device 2-1 in the example of FIG. 3A). Next, immediately after the takt time of the product type 1 in the stage 2, the product type 1 is arranged in the device 3-1 of the stage 3. In this manner, the product type 1 is arranged in the device of each stage. The standby time does not occur for the product type 1.

Next, at 0 minute, the product type 2 is arranged in any one of the devices not operating in the stage 1 (the device 1-2 in the example of FIG. 3B). Next, immediately after the takt time of the product type 2 in the stage 1, the product type 2 is arranged in the device not operating in the stage 2 (the device 2-2 in the example of FIG. 3B). Next, immediately after the takt time of the product type 2 in the stage 2, the product type 2 is arranged in the device not operating in the stage 3 (the device 3-1 in the example of FIG. 3B). In this manner, the product type 2 is arranged in the device of each stage. The standby time does not occur also for the product type 2.

Next, at 0 minute, the product type 3 is arranged in any one of the devices not operating in the stage 1 (the device 1-3 in the example of FIG. 3B). Next, immediately after the takt time of the product type 3 in the stage 1, the product type 3 is arranged in the device not operating in the stage 2. However, in the example of FIG. 3B, since all the devices are operating, the product type 3 may not be arranged until the operation is ended. When the work of the product type 2 is completed in the device 2-2, the operation of the device 2-2 is ended, and thus the product type 3 is arranged in the device 2-2 at the time point when the work of the product type 2 is completed. Next, immediately after the takt time of the product type 3 in the stage 2, the product type 3 is arranged in the device not operating in the stage 3. However, in the example of FIG. 3B, since the device 3-1 is operating, the product type 3 may not be arranged until the operation is ended. When the work of the product type 1 is completed in the device 3-1, the operation of the device 3-1 is ended, and thus the product type 3 is arranged in the device 3-1 at the time point when the work of the product type 1 is completed.

In this manner, in the priority method, according to the order of the priorities, the product type having the high priority is arranged in all the stages so as to satisfy a constraint, and then arrangement of the product type having the next highest priority is determined. However, in the priority method, a long standby time may occur in at least any one of the product types.

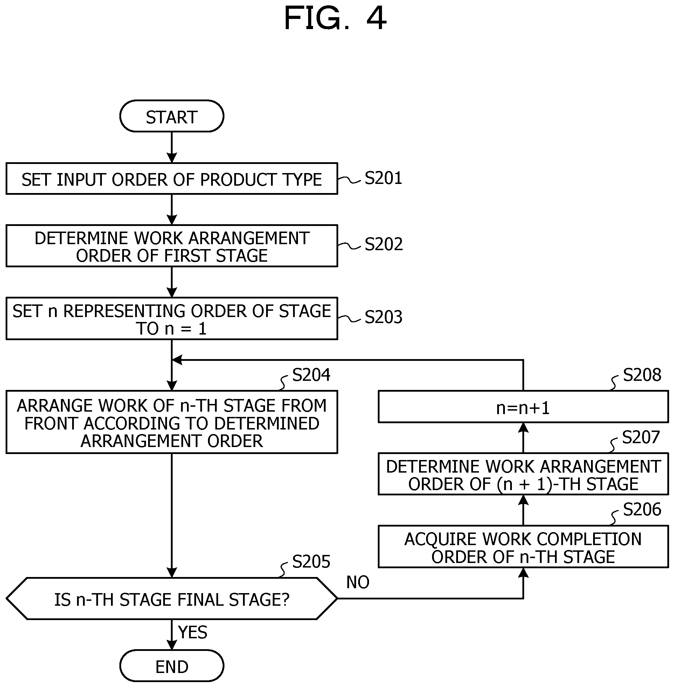

FIG. 4 is a diagram exemplifying a flow in a case where the forward arrangement is applied to the FIFO method. As exemplified in FIG. 4, first, an input order of each product type is set (step S201). Next, a work arrangement order of a first stage is determined (step S202). Next, the variable n representing an order of a stage is set to n = 1 (step S203). Next, work of an n-th stage is arranged from the front according to the determined input order (step S204). Next, it is determined whether or not the n-th stage is the final stage (step S205). In a case where "No" is determined in step S205, a work completion order of the n-th stage is acquired (step S206). Next, a work arrangement order of an (n + 1)-th stage is determined (step S207). Next, 1 is added to the variable n (step S208). Thereafter, step S204 and the subsequent steps are executed again. In a case where "Yes" is determined in step S205, the flow is ended.

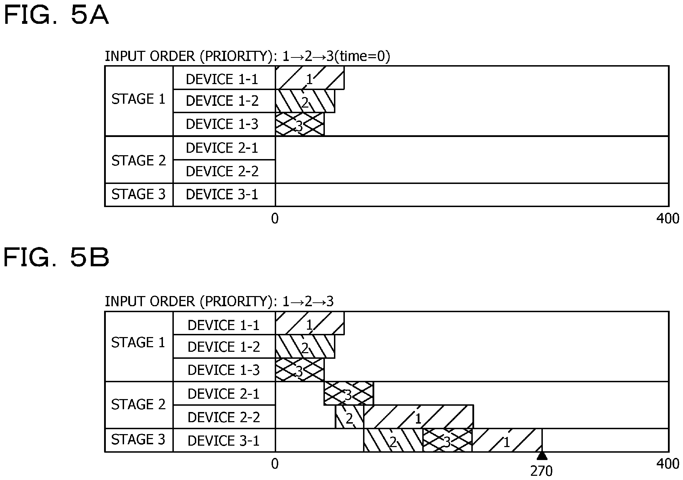

FIGs. 5A and 5B are diagrams exemplifying the forward arrangement of the FIFO method. In the FIFO method, product types are arranged in an order from one that may be arranged early at each time.

First, an input order of each product type is determined. As an example, the input order is determined in an order of the product type 1, the product type 2, and the product type 3. Next, as exemplified in FIG. 5A, each product type is arranged in the devices 1-1 to 1-3 in the stage 1 at 0 minute which is the input starting point to the work line. In a case where the number of devices is smaller than the number of product types, the product types are arranged in an order from the earliest product type according to the input order. Next, since the takt time of the product type 3 is the shortest in the stage 1, immediately after the takt time of the product type 3 in the stage 1, the product type 3 is arranged in any one of the devices in the stage 2 (the device 2-1 in the example of FIG. 5B). Since the takt time of the product type 2 is the next shortest in the stage 1, immediately after the takt time of the product type 2 in the stage 1, the product type 2 is arranged in the device not operating in the stage 2 (the device 2-2 in the example of FIG. 5B). Since the work of the product type 1 is completed next in the stage 1, immediately after the takt time of the product type 1 in the stage 1, the product type 1 is arranged in any one of the devices not operating in the stage 2. However, in the example of FIG. 5B, since all the devices in the stage 2 are operating, the product type 1 may not be arranged until the operation is ended. When the work of the product type 2 is completed in the device 2-2, the operation of the device 2-2 is ended, and thus the product type 1 is arranged in the device 2-2 at the time point when the work of the product type 2 is completed. In the example of FIG. 5B, since the work of the product type 2 is completed first in the stage 2, immediately after the takt time of the product type 2 in the stage 2, the product type 2 is arranged in the device not operating in the stage 3 (the device 3-1 in the example of FIG. 5B). Since the work of the product type 3 is completed next to the product type 2 in the stage 2, immediately after the takt time of the product type 3 in the stage 2, the product type 3 is arranged in the device not operating in the stage 3. However, in the example of FIG. 5B, since the work of the product type 2 is not completed, the product type 3 may not be arranged until the operation is ended. At the time point when the work of the product type 2 is completed in the device 3-1, the product type 3 is arranged in the device 3-1. In the stage 2, the work of the product type 1 is completed last. Immediately after the takt time of the product type 1 in the stage 2, the product type 1 is arranged in the device not operating in the stage 3. However, in the example of FIG. 5B, since the work of the product type 3 is not completed, the product type 1 may not be arranged until the operation is ended. At the time point when the work of the product type 3 is completed in the device 3-1, the product type 1 is arranged in the device 3-1.

In this manner, in the FIFO method, at each time, the product type for which work is completed early in each stage is arranged in the next stage. However, in the FIFO method, a long standby time may occur in at least any one of the product types.

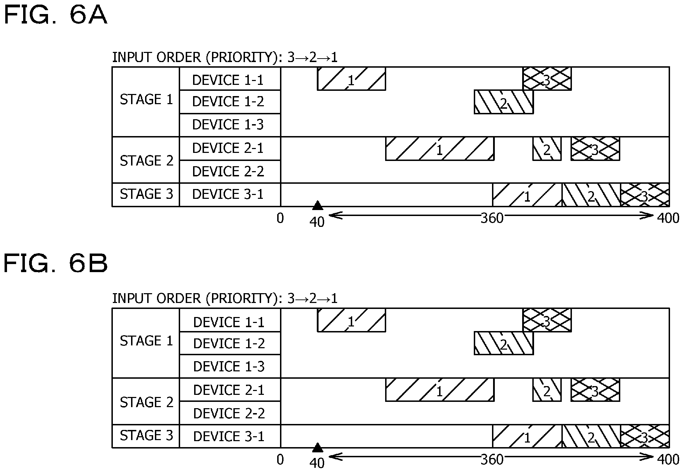

FIG. 6A is a diagram exemplifying the backward arrangement of the priority method. In the backward arrangement, the product types are arranged in the direction opposite to the time axis with the deadline as the starting point. As exemplified in FIG. 6A, each product type is arranged backward according to the priority. For example, it is assumed that the priorities are set in the order of the product type 1, the product type 2, and the product type 3. In this case, the product type 3 is arranged in the device 3-1 such that 400 minutes of the deadline is the work completion time of the product type 3. Next, the product type 3 is arranged in any one of the devices in the stage 2 (the device 2-1 in the example of FIG. 6A) such that a time backward by the takt time of the product type 3 in the stage 3 is the work completion time of the product type 3. Next, the product type 3 is arranged in the device 1-1 in the stage 1 such that a time backward by the takt time of the product type 3 in the stage 2 is the work completion time of the product type 3. In this manner, the product type 3 is arranged in the device of each stage. The standby time does not occur for the product type 3.

Next, the product type 2 is arranged in any one of the devices not operating in the stage 3 such that 400 minutes of the deadline is the work completion time of the product type 2. However, since the work of the product type 3 is being performed in the device 3-1, the product type 2 may not be arranged in the device 3-1. The product type 2 is arranged in the device 3-1 such that the time backward by the takt time of the product type 3 in the stage 3 is the work completion time of the product type 2. Next, the product type 2 is arranged in the device not operating in the stage 2 (the device 2-1 in the example of FIG. 6A) such that a time backward by the takt time of the product type 2 in the stage 3 is the work completion time of the product type 2. Next, the product type 2 is arranged in the device not operating in the stage 1 (the device 1-2 in the example of FIG. 6A) such that a time backward by the takt time of the product type 2 in the stage 2 is the work completion time of the product type 2. In this manner, the product type 2 is arranged in the device of each stage. The standby time does not occur also for the product type 2.

Next, the product type 1 is arranged in any one of the devices not operating in the stage 1 such that 400 minutes of the deadline is the work completion time of the product type 1. However, since the work of the product type 3 is being performed in the device 3-1, the product type 1 may not be arranged in the device 3-1. Since the work of the product type 2 is performed next in the device 3-1, the product type 1 is arranged in the device 3-1 at a time backward by a total of the takt time of the product type 3 and the takt time of the product type 2 from 400 minutes of the deadline. Next, the product type 1 is arranged in the device not operating in the stage 2 (the device 2-1 in the example of FIG. 6A) such that a time backward by the takt time of the product type 1 is the work completion time of the product type 1. Next, the product type 1 is arranged in the device not operating in the stage 1 (the device 1-1 in the example of FIG. 6A) such that a time backward by the takt time of the product type 1 is the work completion time of the product type 1.

In this manner, in the priority method, according to the order of the priorities, each product type is arranged in all stages so as to satisfy a constraint, and then arrangement of the next product type is determined. However, in the priority method, a long standby time may occur in at least any one of the product types.

FIG. 6B is a diagram exemplifying the backward arrangement of the FIFO method. In the backward arrangement, the product types are arranged in the direction opposite to the time axis with the deadline as the starting point. As exemplified in FIG. 6B, each product type is arranged backward according to a set input order. Specifically, each product type is arranged in the stage 3. In a case where the number of devices is smaller than the number of product types, the product types are arranged in an order from the last product type according to the input order. In the example of FIG. 6B, the product type 3 is arranged in the device 3-1 such that 400 minutes of the deadline is the work completion time of the product type 3. Next, the product type 2 is arranged in the device 3-1 such that a time backward by the takt time of the product type 3 in the stage 3 is the work completion time of the product type 2. Next, the product type 1 is arranged in the device 3-1 such that a time backward by the takt time of the product type 2 in the stage 3 is the work completion time of the product type 1.

Next, the product type 3 is arranged in any one of the devices in the stage 2 (the device 2-1 in the example of FIG. 6B) such that the time backward by the takt time of the product type 3 in the stage 3 is the work completion time of the product type 3. Next, the product type 2 is arranged in any one of the devices in the stage 2 (the device 2-1 in the example of FIG. 6B) such that the time backward by the takt time of the product type 2 in the stage 3 is the work completion time of the product type 2. Next, the product type 1 is arranged in any one of the devices in the stage 2 (the device 2-1 in the example of FIG. 6B) such that a time backward by the takt time of the product type 1 in the stage 3 is the work completion time of the product type 1.

Next, the product type 3 is arranged in any one of the devices in the stage 1 (the device 1-1 in the example of FIG. 6B) such that a time backward by the takt time of the product type 3 in the stage 2 is the work completion time of the product type 3. Next, the product type 2 is arranged in any one of the devices in the stage 1 (the device 1-2 in the example of FIG. 6B) such that a time backward by the takt time of the product type 2 in the stage 2 is the work completion time of the product type 2. Next, the product type 1 is arranged in any one of the devices in the stage 1 (the device 1-1 in the example of FIG. 6B) such that a time backward by the takt time of the product type 1 in the stage 2 is the work completion time of the product type 1.

In this manner, in the FIFO method, at each time, the product type for which work is completed early in each stage is arranged in the next stage. However, in the FIFO method, a long standby time may occur in at least any one of the product types.

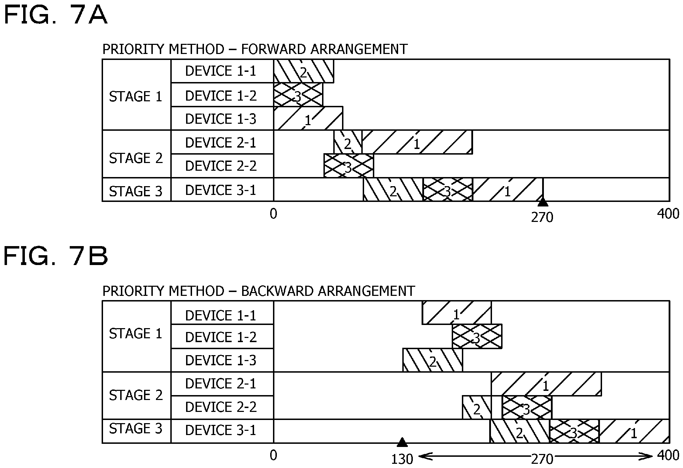

Therefore, it is conceivable to optimize the scheduling. For example, FIG. 7A is a diagram exemplifying a case where the priority of each product type is optimized under a constraint of strictly adhering to the deadline in a case where the forward arrangement is applied to the priority method. In the example of FIG. 7A, the priority is changed with respect to the arrangement of FIGs. 3A and 3B. FIG. 7B is a diagram exemplifying a case where the priority of each product type is optimized under the constraint of strictly adhering to the deadline in a case where the backward arrangement is applied to the priority method. In the example of FIG. 7B, the priority is changed with respect to the arrangement of FIG. 6A. Even in these cases, there is a risk that a long standby time occurs in at least any one of the product types.

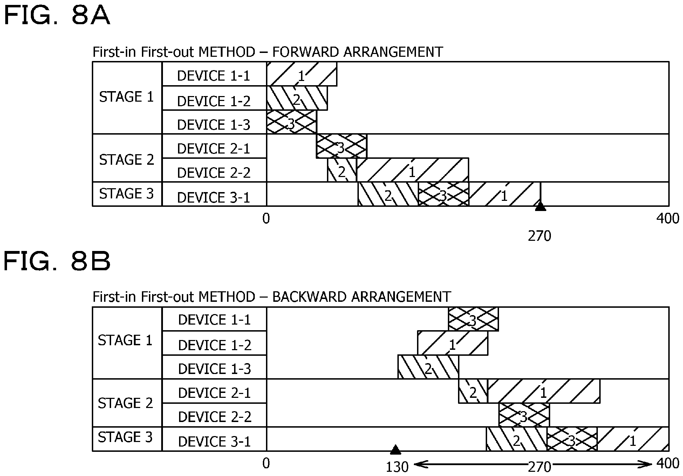

FIG. 8A is a diagram exemplifying a case where the input order of each product type is optimized under the constraint of strictly adhering to the deadline in a case where the forward arrangement is applied to the FIFO method. In the example of FIG. 8A, the input order of each product type is changed with respect to the arrangement of FIGs. 5A and 5B. FIG. 8B is a diagram exemplifying a case where the input order of each product type is optimized under the constraint of strictly adhering to the deadline in a case where the backward arrangement is applied to the FIFO method. In the example of FIG. 8B, the input order is changed with respect to the arrangement of FIG. 6B. Even in these cases, there is a risk that a long standby time occurs in at least any one of the product types.

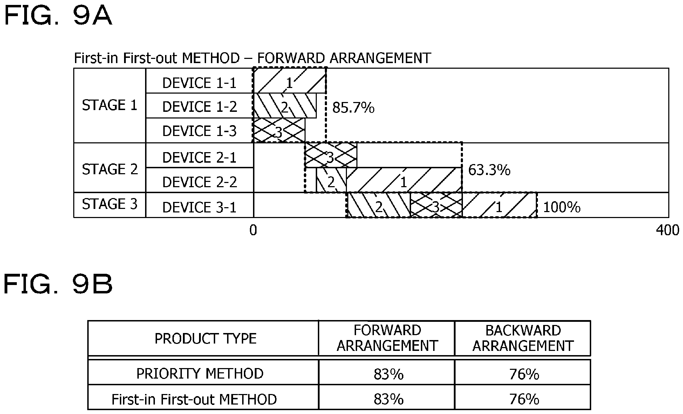

Therefore, it is conceivable to focus on a device operation rate to optimize the device operation rate. FIG. 9A is a diagram exemplifying the device operation rate. In each stage, (a time width from a work start time of a product type for which work is started first to a work completion time of a product type for which work is completed last) × the number of devices = a total operation time is defined. Next, in each stage, a time during which each product type is arranged in each device is defined as an actual operation time. An operation ratio of each stage may be represented as the actual operation time/the total operation time × 100 (%). For example, in the example of FIG. 9A, an area of a region surrounded by a dotted line of the stage 1 is the total operation time of the stage 1. A total of the time during which each product type is arranged in the region surrounded by the dotted line of the stage 1 is the actual operation time of the stage 1. In the example of FIG. 9A, the operation ratio of the stage 1 is 85.7%, the operation ratio of the stage 2 is 63.3%, and the operation ratio of the stage 3 is 100%. An average value of the operation ratios of the respective stages is defined as the device operation rate.

FIG. 9B is a diagram exemplifying the device operation rate in each method. As exemplified in FIG. 9B, the device operation rate is 83% for the results of FIGs. 3A and 3B. The device operation rate is 83% for the results of FIGs. 5A and 5B. The device operation rate is 76% for the result of FIG. 6A. The device operation rate is 76% for the result of FIG. 6B.

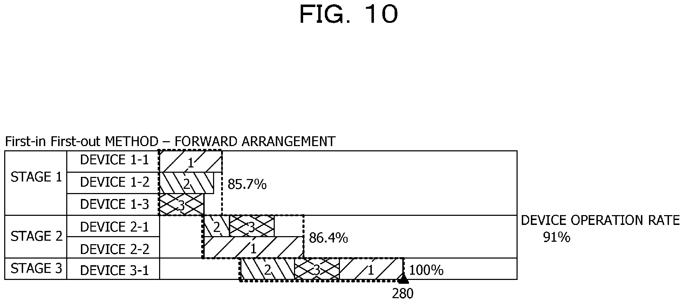

Therefore, it is conceivable to arrange each product type in each stage so as to optimize the device operation rate. FIG. 10 is a diagram exemplifying a case where each product type is arranged in each stage so that the device operation rate is optimized. In the example of FIG. 10, the operation ratio of the stage 2 is improved as compared with that in FIG. 9A. As a result, the device operation rate is improved. However, it is difficult to optimize the device operation rate even with a total of four methods in which the forward arrangement and the backward arrangement are combined with the priority method and the FIFO method. For example, in the forward arrangement, since each product type is arranged from the front, it is difficult to consider replacement of the work in the middle of the stage or intentional delay of the work. In the backward arrangement, since each product type is arranged from the back, the earlier the stage, the greater a risk of a decrease in the operation rate. From the above, it is desired to simultaneously optimize both the work completion time and the device operation rate by optimal arrangement obtained by combining advantages of both the forward arrangement and the backward arrangement. The work completion time is a time from the work start time of the first product type to the work completion time of the last product type.

In the following embodiment, a planning program, a planning method, and an information processing device capable of simultaneously optimizing both the work completion time and the device operation rate will be described.

### [First Embodiment]

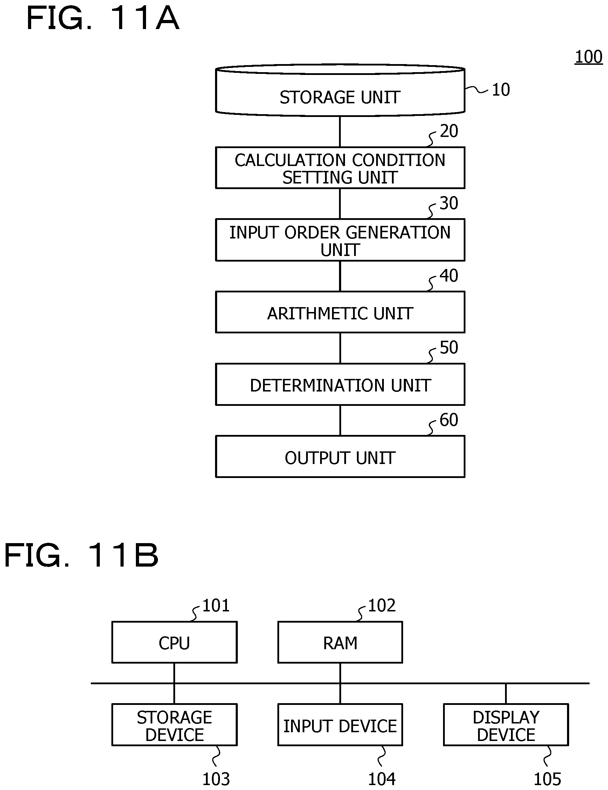

FIG. 11A is a functional block diagram representing an overall configuration of an information processing device 100 according to a first embodiment. The information processing device 100 is a server for optimization processing, or the like. As exemplified in FIG. 11A, the information processing device 100 includes a storage unit 10, a calculation condition setting unit 20, an input order generation unit 30, an arithmetic unit 40, a determination unit 50, an output unit 60, and the like.

FIG. 11B is a block diagram exemplifying a hardware configuration of each unit of the information processing device 100. As exemplified in FIG. 11B, the information processing device 100 includes a CPU 101, a RAM 102, a storage device 103, an input device 104, a display device 105, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores a planning program. The input device 104 is an input device such as a mouse or a keyboard. Alternatively, the input device 104 is an interface such as an external memory such as a USB memory. The display device 105 is a device that displays a processing result of the information processing device 100 or the like, and is a display or the like. Each unit of the information processing device 100 is implemented by the CPU 101 executing the planning program. Note that hardware such as a dedicated circuit may be used as each unit of the information processing device 100.

The storage unit 10 stores a layout model of a work line. As an example, the storage unit 10 stores the layout model exemplified in FIG. 1A. Furthermore, the storage unit 10 stores master data. As an example, the storage unit 10 stores the master data exemplified in FIG. 1B.

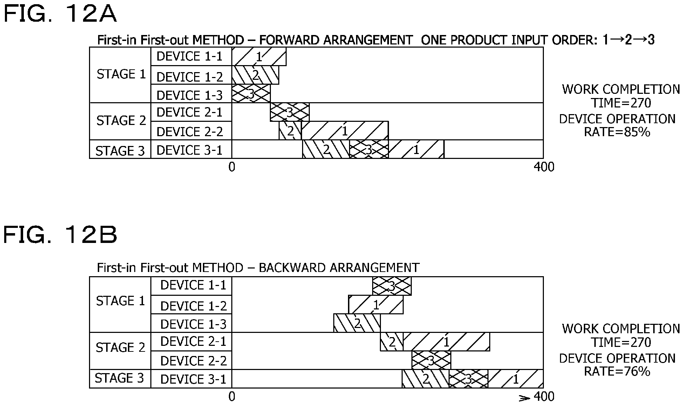

Subsequently, a principle of arrangement of each product type in each stage in the present embodiment will be described. In the present embodiment, four types of processing of procedures 01 to 04 are sequentially performed. FIG. 12A is a diagram exemplifying the procedure 01. As exemplified in FIG. 12A, in the procedure 01, the forward arrangement is applied to the FIFO method. In this case, the result described in FIG. 5B is obtained. In this case, a work completion time is 270 minutes, and a device operation rate is 85%.

Next, the procedure 02 is performed. In the procedure 02, an arrangement order of the backward arrangement is determined from a completion order of each product type of the final stage in arrangement obtained in the procedure 01. Specifically, since work is completed in an order of the product type 2 → 3 → 1 in the forward arrangement of the procedure 01, the arrangement order of the backward arrangement is set in an order of the product type 1 → 3 → 2. For each product type, in a case where there is a plurality of arrangeable devices, the product type is arranged in a device with a shorter operation time before arrangement. FIG. 12B is a diagram exemplifying a case where arrangement is performed according to the procedure 02. In the example of FIG. 12B, the work completion time is 270 minutes, and the device operation rate is 76%.

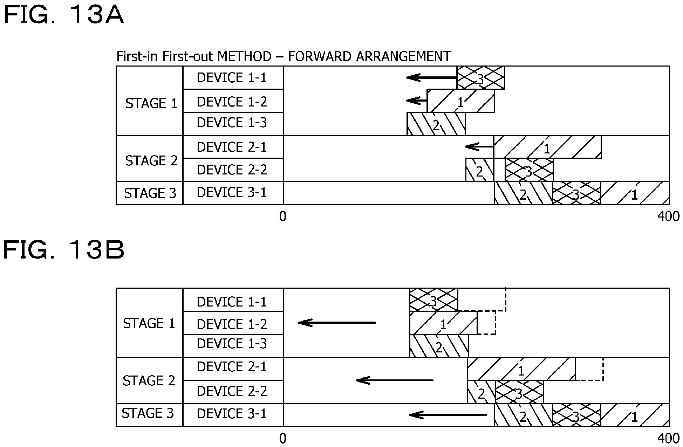

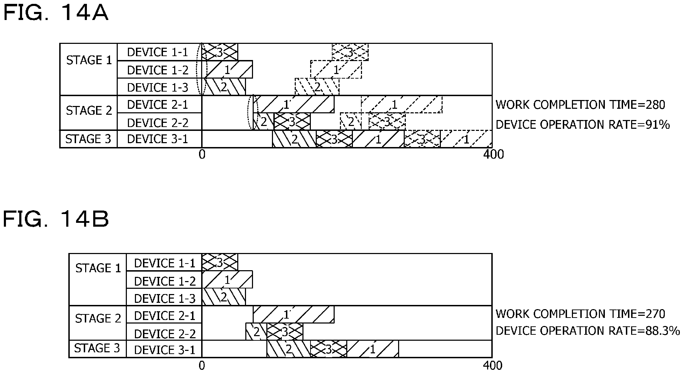

Next, the procedure 03 is performed. In the procedure 03, the backward arrangement in the procedure 02 is replaced with the forward arrangement. In this case, start times of each stage are aligned as much as possible. In the example of FIG. 13A, in the stage 1, the work start times of the product types 1 to 3 may be aligned from the front. In the stage 2, the work start times of the product types 1 and 2 may be aligned from the front. In this case, as exemplified in FIG. 13B, the work start time of each stage is moved forward so as not to collapse back-and-forth constraints. For example, portions where work start points are aligned are linked and fixed so as not to be shifted back and forth. Next, as exemplified in FIG. 14A, the backward arrangement in FIG. 13B is replaced with a plan of the forward arrangement. As a result, the work completion time is 280 minutes, and the device operation rate is 91%.

Next, the procedure 04 is performed. In the procedure 04, with respect to the arrangement obtained in the procedure 03, the work that may be moved forward is individually moved forward as much as possible. For example, as exemplified in FIG. 14B, the linked work is divided and moved forward as much as possible. As a result, the work completion time is 270 minutes, and the device operation rate is 88.3%.

By these procedures 01 to 04, both the work completion time and the device operation rate may be simultaneously optimized. Note that the procedures 01 and 02 may be the FIFO method or the priority method.

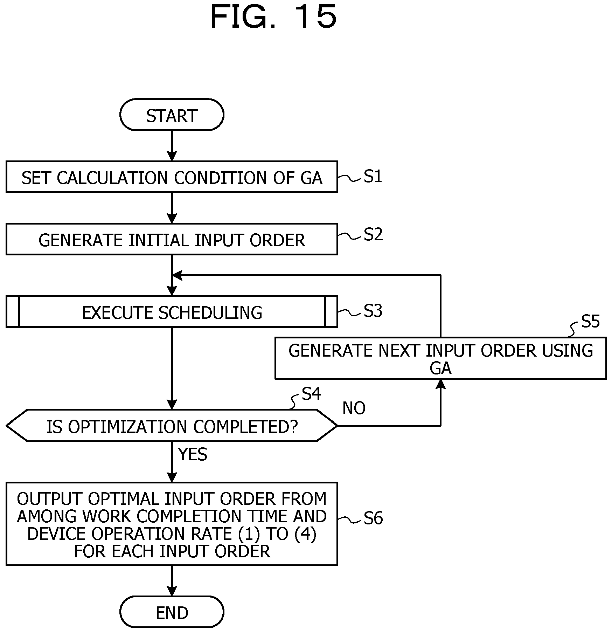

Subsequently, an example of a specific operation of each unit of the information processing device 100 will be described. FIG. 15 is a diagram exemplifying an optimization processing flow executed by the information processing device 100. As exemplified in FIG. 15, the calculation condition setting unit 20 sets a calculation condition of a genetic algorithm (GA) (step S1). The calculation condition includes, for example, the number of times of repetition or the like of step S4 to be described later.

Next, the input order generation unit 30 generates an initial input order of each product type (step S2). For example, the input order generation unit 30 may generate the initial input order based on, for example, information input by a user using the input device 104, or may randomly generate the initial input order.

Next, the arithmetic unit 40 executes scheduling according to the initial input order (step S3). Details of step S3 will be described later.

Next, the determination unit 50 determines whether or not optimization is completed (step S4). For example, the determination unit 50 determines that the optimization is completed in a case where the number of times of repetition included in the calculation condition set in step S1 is reached.

In a case where "No" is determined in step S4, the input order generation unit 30 generates the next input order using the genetic algorithm or the like (step S5). In this case, the input order generation unit 30 generates the input order so that the device operation rate and the work completion time satisfy predetermined conditions. Thereafter, step S3 and the subsequent steps are executed again. In the second and subsequent times of execution of step S3, the scheduling is executed according to the input order generated in step S5.

In a case where "Yes" is determined in step S4, the output unit 60 outputs an optimal input order from among "work completion time and device operation rate" (1) to (4) for each input order (step S6). The output input order is displayed on the display device 105 or the like. For example, the input order with which the "work completion time and device operation rate" (4) is the best may be output. For example, the input order with which the "work completion time" (4) is the best may be output, the input order with which the "device operation rate" (4) is the best may be output, and the input order with which a weighted average of the "work completion time" (4) and the "device operation rate" (4) is the best may be output. The "work completion time and device operation rate" (1) to (4) will be described later.

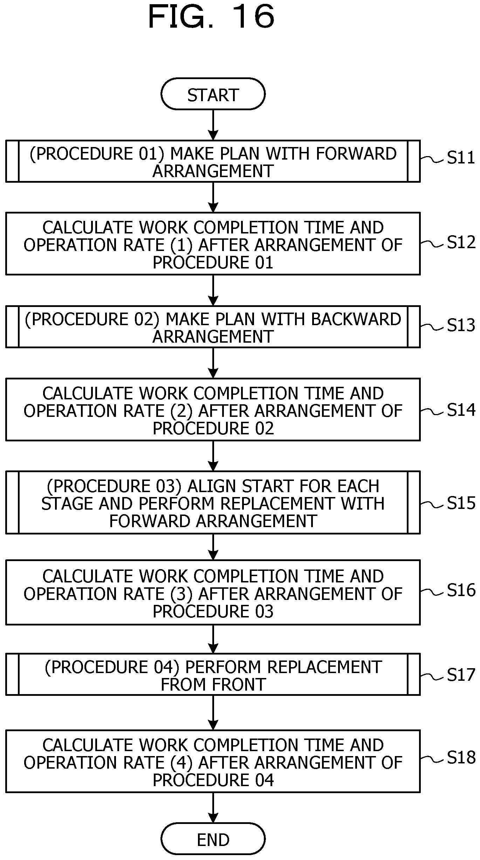

FIG. 16 is a flowchart exemplifying details of processing in step S3. As exemplified in FIG. 16, the arithmetic unit 40 executes the forward arrangement according to the procedure 01 described in FIG. 12A (step S11).

Next, the arithmetic unit 40 calculates the "work completion time and device operation rate" (1) after the arrangement of the procedure 01 (step S12).

Next, the arithmetic unit 40 executes the backward arrangement according to the procedure 02 described in FIG. 12B (step S13).

Next, the arithmetic unit 40 calculates the "work completion time and device operation rate" (2) after the arrangement of the procedure 02 (step S14).

Next, the arithmetic unit 40 aligns work start times for each stage and performs replacement with the forward arrangement according to the procedure 03 described in FIG. 13A (step S15).

Next, the arithmetic unit 40 calculates the "work completion time and device operation rate" (3) after the arrangement of the procedure 03 (step S16).

Next, according to the procedure 04 described in FIG. 13B, the arithmetic unit 40 individually moves forward the work that may be moved forward as much as possible (step S17).

Next, the arithmetic unit 40 calculates the "work completion time and device operation rate" (4) after the arrangement of the procedure 04 (step S18). The execution of the flowchart ends through the above processing.

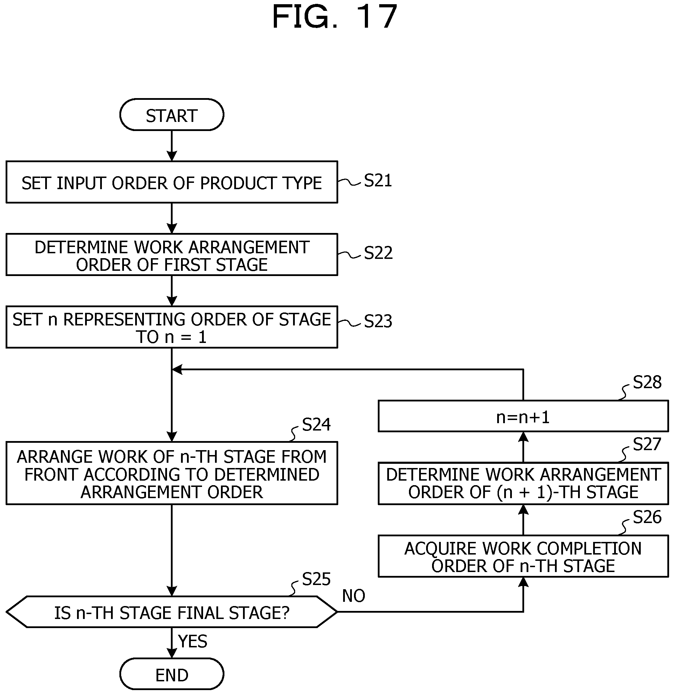

FIG. 17 is a flowchart exemplifying details of the procedure 01. As exemplified in FIG. 17, the arithmetic unit 40 sets an input order of each product type (step S21).

Next, the arithmetic unit 40 determines a work arrangement order of the first stage (stage 1) (step S22).

Next, the arithmetic unit 40 sets n representing an order of a stage to n = 1 (step S23).

Next, the arithmetic unit 40 arranges work of an n-th stage from the front according to the determined arrangement order (step S24).

Next, the arithmetic unit 40 determines whether or not the n-th stage is the final stage (step S25). In the example of FIG. 1A, the stage 3 is the final stage.

In a case where "No" is determined in step S25, the arithmetic unit 40 acquires a work completion order of each product type of the n-th stage (step S26).

Next, the arithmetic unit 40 determines a work arrangement order of an (n + 1)-th stage (step S27).

Next, the arithmetic unit 40 sets n to n + 1 and increases n by 1 (step S28). Thereafter, step S24 and the subsequent steps are executed again.

In a case where "Yes" is determined in step S25, the execution of the flowchart ends.

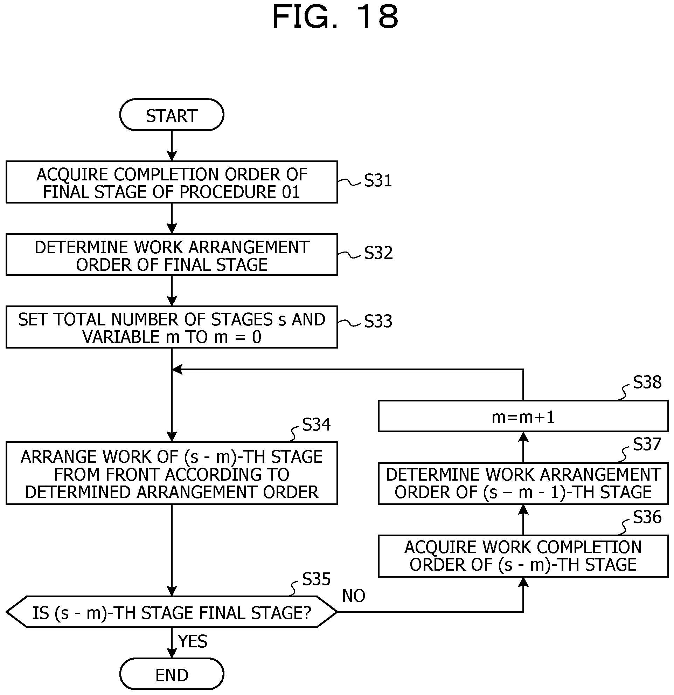

FIG. 18 is a flowchart exemplifying details of the procedure 02. As exemplified in FIG. 18, the arithmetic unit 40 acquires a work completion order of each product type of the final stage of the procedure 01 (step S31).

Next, the arithmetic unit 40 determines a work arrangement order of the final stage (step S32).

Next, the arithmetic unit 40 sets a total number of stages s and a variable m. The arithmetic unit 40 sets the variable m to 0 (step S33).

Next, the arithmetic unit 40 arranges work of an (s - m)-th stage from the front according to the determined arrangement order (step S34).

Next, the arithmetic unit 40 determines whether or not the (s - m)-th stage is the final stage (step S35).

In a case where "No" is determined in step S35, the arithmetic unit 40 acquires a work completion order of (s - m) stages before (step S36).

Next, the arithmetic unit 40 determines a work arrangement order of (s - m - 1) stages before (step S37).

Next, the arithmetic unit 40 substitutes m + 1 for m and increases the variable m by 1 (step S38). Thereafter, step S34 and the subsequent steps are executed again.

In a case where "Yes" is determined in step S35, the execution of the flowchart ends.

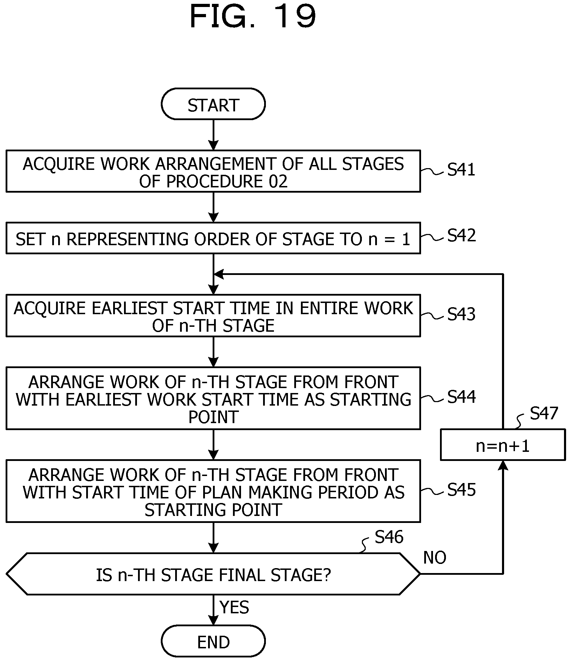

FIG. 19 is a flowchart exemplifying details of the procedure 03. The arithmetic unit 40 acquires work arrangement of all stages of the procedure 02 (step S41).

Next, the arithmetic unit 40 sets the variable n representing an order of a stage. The arithmetic unit 40 sets n = 1 (step S42).

Next, the arithmetic unit 40 acquires the earliest work start time in the entire work of the n-th stage (step S43).

Next, the arithmetic unit 40 arranges the work of the n-th stage from the front with the earliest work start time as a starting point (step S44).

Next, the arithmetic unit 40 arranges the work of the n-th stage from the front with a start time of a plan making period as a starting point (step S45).

Next, the arithmetic unit 40 determines whether or not the n-th stage is the final stage (step S46).

In a case where "No" is determined in step S46, the arithmetic unit 40 substitutes n + 1 for n and increases n by 1 (step S47). Thereafter, step S43 and the subsequent steps are executed again.

In a case where "Yes" is determined in step S46, the execution of the flowchart ends.

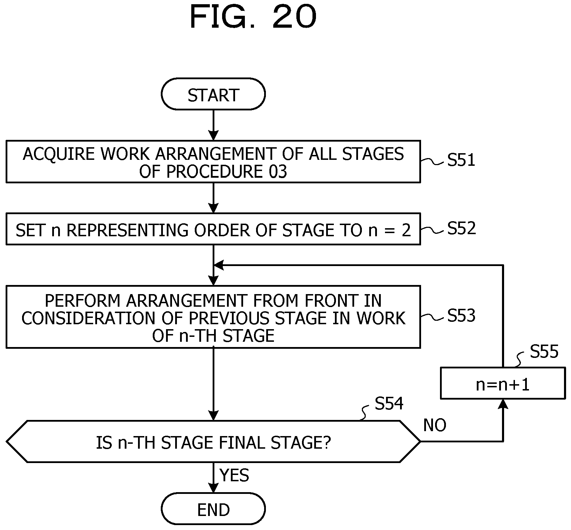

FIG. 20 is a flowchart exemplifying details of the procedure 04. As exemplified in FIG. 20, the arithmetic unit 40 acquires work arrangement of all stages of the procedure 03 (step S51).

Next, the arithmetic unit 40 sets the variable n representing an order of a stage. The arithmetic unit 40 sets the variable n to 2 (step S52).

Next, the arithmetic unit 40 performs arrangement from the front in consideration of a previous stage in the work of the n-th stage (step S53).

Next, the arithmetic unit 40 determines whether or not the n-th stage is the final stage (step S54).

In a case where "No" is determined in step S54, the arithmetic unit 40 substitutes n + 1 for the variable n and increases the variable n by 1 (step S55). Thereafter, step S53 and the subsequent steps are executed again.

In a case where "Yes" is determined in step S54, the execution of the flowchart ends.

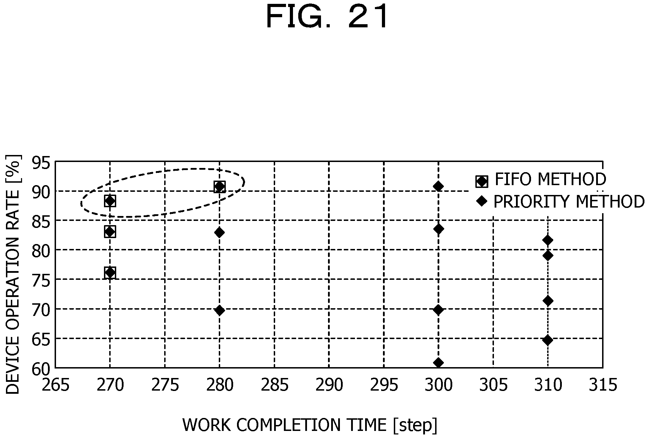

Subsequently, simulation has been performed on the layout of FIG. 1A and the master data of FIG. 1B using the optimization processing according to the present embodiment. FIG. 21 is a diagram illustrating a simulation result. As illustrated in FIG. 21, solutions surrounded by a dotted line is an optimal solution group of a result of performing the optimization using the optimization processing according to the present embodiment. As illustrated in FIG. 21, it may be seen that both the device operation rate and the work completion time may be simultaneously optimized.

Note that solutions obtained by the FIFO method and solutions obtained by the priority method are also illustrated in FIG. 21. From the result of FIG. 21, it may be seen that solutions with the high device operation rate, for which either the FIFO method or the priority method has been unable to search, are obtained.

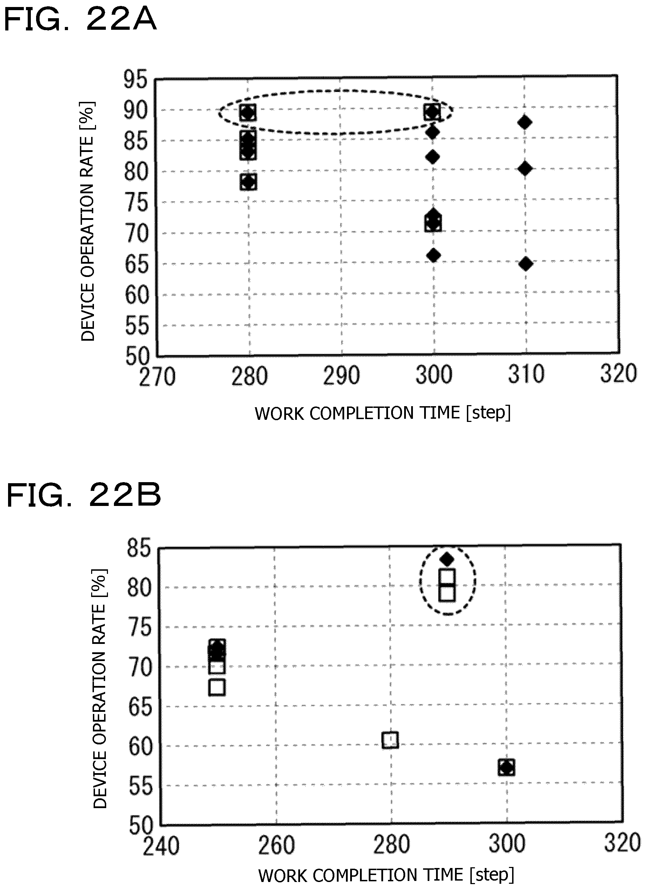

FIG. 22A is a diagram illustrating a result of the optimization processing in a case where the number of devices in the stage 1 is set to 2, the number of devices in the stage 2 is set to 2, and the number of devices in the stage 3 is set to 1. As illustrated in FIG. 22A, it may be seen that the result of performing the optimization using the optimization processing according to the present embodiment is a better result than the results of using the FIFO method and the priority method.

FIG. 22B is a diagram illustrating a result of the optimization processing in a case where the number of devices in the stage 1 is set to 2, the number of devices in the stage 2 is set to 2, and the number of devices in the stage 3 is set to 2. As illustrated in FIG. 22B, it may be seen that the result of performing the optimization using the optimization processing according to the present embodiment is a better result than the results of using the FIFO method and the priority method.

According to the present embodiment, by repeating the backward arrangement and the forward arrangement while bidirectionally satisfying the constraint based on the arrangement in the plan made with the forward arrangement, a bias in one direction is suppressed, so that it is possible to simultaneously optimize both the work completion time and the device operation rate. In the first forward arrangement, the device operation rate may be further improved by adopting the FIFO method.

In each of the examples described above, the plurality of product types is an example of the plurality of objects. The device of each stage is an example of the processing entity of each stage. Therefore, the processing entity is not limited to a machine but may be a person. The procedure 01 is an example of a first stage of arranging a plurality of objects in processing entities of a plurality of types of processing by forward arrangement in which arrangement is planned with a predetermined time point as a starting point according to a predetermined order for the plurality of objects. The procedure 02 is an example of a second stage of arranging the plurality of objects in the processing entities of the plurality of stages by backward arrangement in which arrangement is planned in a direction opposite to a time axis with a predetermined time point as a starting point according to a processing completion order of each object of final processing in the arrangement obtained in the first stage. The procedure 03 is an example of a third stage of aligning processing start times of each object from the front in each processing in the arrangement obtained in the second stage. The procedure 04 is an example of a fourth stage of moving forward the arrangement obtained in the third stage to a predetermined time point.

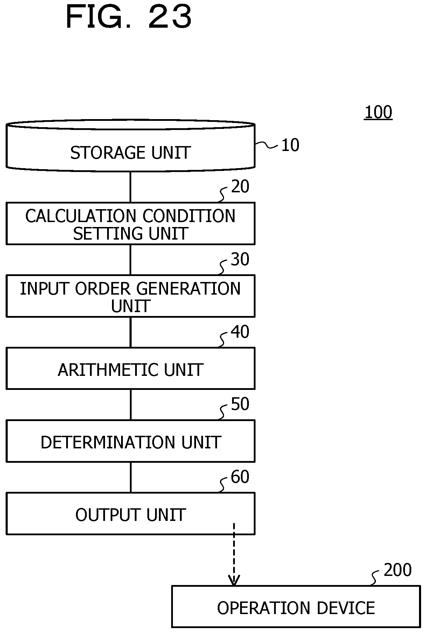

Note that, in each example described above, a result output by the output unit 60 is output to the display device 105, but may be output to an operation device 200. FIG. 23 is a block diagram exemplifying this case. The operation device 200 is a belt conveyor or the like for conveying each product type to each device of each stage in the work line. As exemplified in FIG. 23, a result output by the output unit 60 is output to the operation device 200. The operation device 200 operates so that an optimal solution received from the output unit 60 is implemented. The operation device 200 includes a CPU, a RAM, a storage device, and the like. For example, a control program or the like for controlling an operation or the like of the operation device 200 is stored in the storage device, the optimal solution received from the output unit 60 is stored in the RAM, and the CPU controls the operation of the operation device 200 based on the control program and the optimal solution.

While the embodiment of the present invention has been described above in detail, the present invention is not limited to such a specific embodiment, and a variety of modifications and alterations may be made within the scope of the gist of the present invention described in the claims.

### REFERENCE SIGNS LIST

- 10: Storage unit
- 20: Calculation condition setting unit
- 30: Input order generation unit
- 40: Arithmetic unit
- 50: Determination unit
- 60: Output unit
- 100: Information processing device
- 105: Display device

## Claims

1. A planning program that sequentially performs a plurality types of processing on a plurality of objects, in which a processing time is set for each of the plurality of types of processing for each of the plurality of objects and the number of processing entities for any one of the plurality of objects is set for each of the plurality of types of processing, and performs a plan of arranging the plurality of objects in the processing entities of the plurality of types of processing under a condition that, during a period in which the processing entity is performing processing on any one of the objects, the processing entity do not perform processing on another object,
the planning program for causing a computer to execute processing comprising:
a first stage of arranging the plurality of objects in the processing entities of the plurality of types of processing by forward arrangement in which arrangement is planned with a predetermined time point as a starting point according to a predetermined order for the plurality of objects;
a second stage of arranging the plurality of objects in the processing entities of the plurality of types of processing by backward arrangement in which arrangement is planned in a direction opposite to a time axis with a predetermined time point as a starting point according to a processing completion order of each object of final processing in the arrangement obtained in the first stage;
a third stage of aligning processing start times of each object from a front in each processing in the arrangement obtained in the second stage; and
a fourth stage of moving forward the arrangement obtained in the third stage to a predetermined time point.

2. The planning program according to claim 1, wherein, in the first stage, the plurality of objects is arranged in first processing according to a predetermined order, and after the arranging, the plurality of objects is arranged in next processing in an order of earliest completion of the processing in each processing.

3. The planning program according to claim 1, wherein, in the first stage, the plurality of objects is arranged in the processing entities of the plurality of types of processing according to priorities set for the plurality of objects.

4. The planning program according to any one of claims 1 to 3, for causing the computer to further execute processing comprising
causing a repetition stage of repeating the first stage to the fourth stage after an input order of inputting the plurality of objects to the plurality of types of processing is changed to be executed, and searching for the input order such that an operation rate and a processing completion time satisfy predetermined conditions in the repetition stage,
wherein, when it is defined in each processing that (a time width from a processing start time of an object for which processing is started first to a processing completion time of an object for which processing is completed last) × the number of entities = a total operation time, a time during which each object is arranged in each entity in each processing is an actual operation time, and an operation ratio of each processing is the actual operation time/the total operation time × 100 (%),the operation rate is defined as an average value of operation ratios of each processing, and
the processing completion time is defined as a time from a processing start time of a first object to a processing completion time of a last object.

5. The planning program according to claim 4, for causing the computer to further execute processing comprising
selecting and outputting a result in which the operation rate and the processing completion time are best for each result obtained by the repetition stage.

6. The planning program according to claim 4, wherein a genetic algorithm is used to search for the input order.

7. A planning method that sequentially performs a plurality types of processing on a plurality of objects, in which a processing time is set for each of the plurality of types of processing for each of the plurality of objects and the number of processing entities for any one of the plurality of objects is set for each of the plurality of types of processing, and performs a plan of arranging the plurality of objects in the processing entities of the plurality of types of processing under a condition that, during a period in which the processing entity is performing processing on any one of the objects, the processing entity do not perform processing on another object,
the planning program for causing a computer to execute processing comprising:
a first stage of arranging the plurality of objects in the processing entities of the plurality of types of processing by forward arrangement in which arrangement is planned with a predetermined time point as a starting point according to a predetermined order for the plurality of objects;
a second stage of arranging the plurality of objects in the processing entities of the plurality of types of processing by backward arrangement in which arrangement is planned in a direction opposite to a time axis with a predetermined time point as a starting point according to a processing completion order of each object of final processing in the arrangement obtained in the first stage;
a third stage of aligning processing start times of each object from a front in each processing in the arrangement obtained in the second stage; and
a fourth stage of moving forward the arrangement obtained in the third stage to a predetermined time point.

8. The planning method according to claim 7, wherein, in the first stage, the plurality of objects is arranged in first processing according to a predetermined order, and after the arranging, the plurality of objects is arranged in next processing in an order of earliest completion of the processing in each processing.

9. The planning method according to claim 7, wherein, in the first stage, the plurality of objects is arranged in the processing entities of the plurality of types of processing according to priorities set for the plurality of objects.

10. The planning method according to any one of claims 7 to 9, for causing the computer to further execute processing comprising
causing a repetition stage of repeating the first stage to the fourth stage after an input order of inputting the plurality of objects to the plurality of types of processing is changed to be executed, and searching for the input order such that an operation rate and a processing completion time satisfy predetermined conditions in the repetition stage,
wherein, when it is defined in each processing that (a time width from a processing start time of an object for which processing is started first to a processing completion time of an object for which processing is completed last) × the number of entities = a total operation time, a time during which each object is arranged in each entity in each processing is an actual operation time, and an operation ratio of each processing is the actual operation time/the total operation time × 100 (%),the operation rate is defined as an average value of operation ratios of each processing, and
the processing completion time is defined as a time from a processing start time of a first object to a processing completion time of a last object.

11. The planning method according to claim 10, for causing the computer to further execute processing comprising
selecting and outputting a result in which the operation rate and the processing completion time are best for each result obtained by the repetition stage.

12. The planning method according to claim 10, wherein a genetic algorithm is used to search for the input order.

13. An information processing device that sequentially performs a plurality types of processing on a plurality of objects, in which a processing time is set for each of the plurality of types of processing for each of the plurality of objects and the number of processing entities for any one of the plurality of objects is set for each of the plurality of types of processing, and performs a plan of arranging the plurality of objects in the processing entities of the plurality of types of processing under a condition that, during a period in which the processing entity is performing processing on any one of the objects, the processing entity do not perform processing on another object, comprising:
an arithmetic unit configured to execute:
a first stage of arranging the plurality of objects in the processing entities of the plurality of types of processing by forward arrangement in which arrangement is planned with a predetermined time point as a starting point according to a predetermined order for the plurality of objects;
a second stage of arranging the plurality of objects in the processing entities of the plurality of types of processing by backward arrangement in which arrangement is planned in a direction opposite to a time axis with a predetermined time point as a starting point according to a processing completion order of each object of final processing in the arrangement obtained in the first stage;
a third stage of aligning processing start times of each object from a front in each processing in the arrangement obtained in the second stage; and
a fourth stage of moving forward the arrangement obtained in the third stage to a predetermined time point.

14. The information processing device according to claim 13, wherein, in the first stage, the plurality of objects is arranged in first processing according to a predetermined order, and after the arranging, the plurality of objects is arranged in next processing in an order of earliest completion of the processing in each processing.

15. The information processing device according to claim 13, wherein, in the first stage, the plurality of objects is arranged in the processing entities of the plurality of types of processing according to priorities set for the plurality of objects.

16. The information processing device according to any one of claims 13 to 15, wherein the arithmetic unit:
executes a repetition stage of repeating the first stage to the fourth stage after an input order of inputting the plurality of objects to the plurality of types of processing is changed to be executed, and searches for the input order such that an operation rate and a processing completion time satisfy predetermined conditions in the repetition stage,
wherein, when it is defined in each processing that (a time width from a processing start time of an object for which processing is started first to a processing completion time of an object for which processing is completed last) × the number of entities = a total operation time, a time during which each object is arranged in each entity in each processing is an actual operation time, and an operation ratio of each processing is the actual operation time/the total operation time × 100 (%),the operation rate is defined as an average value of operation ratios of each processing, and
the processing completion time is defined as a time from a processing start time of a first object to a processing completion time of a last object.

17. The information processing device according to claim 16, wherein the arithmetic unit:
selects and outputs a result in which the operation rate and the processing completion time are best for each result obtained by the repetition stage.

18. The information processing device according to claim 16, wherein a genetic algorithm is used to search for the input order.
